# FASCICULE DE BREVET EUROPEEN

(11) **EP 0 702 179 B1**
(45) Date de publication et mention de la délivrance du brevet: **24.05.2000**
(21) Numéro de dépôt: 95420248.7
(22) Date de dépôt: 04.09.1995
(51) Int. Cl.: F16L 1/11, H02G 9/02

(54) **Dispositif avertisseur pour le repérage d'ouvrages enterrés**
Warnvorrichtung zum Erkennen von unterirdischen Bauwerken
Warning device for visually indicating underground constructions

(30) Priorité: 14.09.1994 FR 9411215
(43) Date de publication de la demande: 20.03.1996
(73) Titulaire: PLYMOUTH FRANCAISE, 69320 Feyzin (FR)
(72) Inventeur: Dusza, Lionel, F-01800 Villieu Loyes Mollon (FR)
(74) Mandataire: Maureau, Philippe

(56) Documents cités:
- EP-A- 0 239 510
- EP-A- 0 314 589
- FR-A- 2 190 241
- FR-A- 2 384 427
- FR-A- 2 551 480
- FR-A- 2 697 094

## Description

La présente invention a pour objet un dispositif avertisseur pour le repérage d'ouvrages enterrés.

Afin de faciliter le repérage des canalisations ou câbles enterrés, pour éviter leur dégradation lors de travaux effectués ultérieurement, il est connu d'utiliser des dispositifs avertisseurs.

Un dispositif avertisseur est placé au-dessus de la canalisation ou du câble enterré, à au moins vingt centimètres de celui-ci habituellement, de telle sorte que l'outil réalisant une fouille dans le sol atteint le dispositif avertisseur avant d'atteindre la canalisation ou le câble enterré. De cette façon, l'opérateur est prévenu qu'il ne faut pas creuser à cet endroit-là car il existe un risque de détérioration de la canalisation ou du câble enterré.

La solution la plus ancienne consiste à réaliser un dispositif comprenant un grillage en matière synthétique de structure homogène. Ce grillage ne possédant pas de résistance mécanique suffisante, il ne donne pas satisfaction car, lorsqu'il est accroché par le godet d'une pelle mécanique, il se rompt immédiatement, sans que l'on dispose, de façon sure, de morceaux de grillage dépassant dans les parois de la fouille, ou hors du godet, permettant une visualisation immédiate.

Il est connu, par le document FR-A-2 190 241, d'associer à un grillage support possédant une faible résistance mécanique des bandes en matériau présentant une résistance plus importante, tel qu'en polypropylène étiré. Lorsqu'un tel dispositif est accroché par le godet d'une pelle, le grillage se rompt, mais la résistance offerte par les bandes permet à celles-ci de dépasser des parois de la fouille réalisée.

Toutefois, on ne dispose pas de façon certaine, dans une telle hypothèse, d'éléments de signalisation au niveau du godet de la machine.

Le document FR-A-2 551 480 concerne un dispositif de signalisation comportant un support de faible résistance à la rupture, auquel sont associés des éléments séparés ayant une grande résistance à la rupture. Lorsqu'un tel dispositif est accroché par le godet d'une pelle, le support se rompt, mais les éléments discontinus sont accrochés par le godet et peuvent faire saillie de la tranchée. Toutefois, ce dispositif est délicat à mettre en oeuvre compte tenu des difficultés de fixation des éléments indépendants les uns des autres sur le support.

Un certain nombre d'autres dispositifs sont apparus sur le marché à la suite de l'établissement d'une norme imposant, après accrochage d'un dispositif de signalisation par le godet d'une pelle, que certains éléments de signalisation dépassent de 20 centimètres de la fouille, et que d'autres éléments dépassent de 20 centimètres hors du godet.

Les dispositifs permettant de répondre à cette norme se présentent, le plus souvent, sous forme de grillages en matière synthétique comportant des prédécoupes transversales.

Ces dispositifs ne sont pas très fiables, car la longueur d'éléments de signalisation dépassant de la fouille ou du godet n'est pas toujours de 20 centimètres.

D'autres dispositifs sont constitués par un grillage support équipé d'éléments longitudinaux résistant à la traction et comportant des prédécoupes transversales.

Les dispositifs avertisseurs peuvent être utilisés en pose manuelle ou en pose dite mécanisée, c'est-à-dire déposés simultanément avec le câble par une machine à une profondeur et à une vitesse d'avancement déterminée.

Pour la pose mécanisée, les dispositifs avertisseurs doivent être de plus faible largeur que pour la pose manuelle alors que leur résistance mécanique doit être supérieure compte tenu des efforts imposés aux dispositifs lors de leur passage sur machine.

Outre leur complexité et leur prix de revient élevé, les dispositifs connus font souvent l'objet de rupture lors de leur utilisation en pose mécanisée.

Le but de l'invention est de fournir un dispositif avertisseur pour le repérage d'ouvrages enterrés qui soit d'une structure simple, compatible avec les différentes techniques de pose et qui permette, à coup sûr, le repérage de ces ouvrages par visualisation d'au moins un élément, tant au niveau de la fouille qu'au niveau du godet de l'engin utilisé pour réaliser cette fouille.

A cet effet, le dispositif avertisseur pour le repérage d'ouvrages enterrés qu'elle propose est caractérisé en ce qu'il est constitué d'une bande d'un matériau présentant une orientation moléculaire, de sorte que sa résistance mécanique soit très élevée dans le sens longitudinal et moins élevée dans le sens transversal, et comportant au moins une série de fenêtres, ouvertes ou dont le contour est fragilisé, espacées les unes des autres et placées sur une même ligne parallèle à l'axe longitudinal de la bande.

Lorsqu'un godet d'une pelle mécanique accroche un tel dispositif avertisseur, une déchirure s'amorce longitudinalement au niveau des fenêtres proches du godet. Dans les zones ne comportant pas de fenêtre, ou qui ne sont pas situées entre des fenêtres, la bande se déchire de façon aléatoire sans respecter aucune configuration particulière. En revanche dans chaque zone située entre deux fenêtres consécutives le long de la bande, et soumise à l'action du godet, il se produit, à partir des deux fenêtres qui constituent les amorces de rupture, deux déchirures longitudinales assurant la formation d'une lanière. Ainsi, au moins une mince lanière reste visible à l'extérieur du godet tandis que d'autres lanières peuvent dépasser des parois de la fouille, et permettent le repérage de l'ouvrage enterré.

Grâce à sa résistance mécanique élevée dans le sens longitudinal, une telle bande est parfaitement adaptée à une pose mécanisée.

De plus, les fenêtres, lorsqu'elles sont ouvertes, servent non seulement à amorcer des déchirures, mais permettent également le passage de l'eau d'infiltration lorsque le dispositif est enterré.

Avantageusement, la bande comporte au moins deux séries de fenêtres régulièrement espacées, l'espacement entre deux fenêtres consécutives étant constant et identique pour chaque série, et les fenêtres d'une série sont décalées longitudinalement par rapport aux fenêtres de la série voisine. Ainsi, lorsqu'un godet accroche le dispositif avertisseur, quel que soit sa position par rapport à ce dernier, au moins un élément de signalisation reste visible à l'extérieur du godet. Comme de plus les fenêtres des séries sont décalées, il y a une forte probabilité pour qu'un élément de visualisation dépasse du godet et que l'autre reste au niveau de la fouille.

Plusieurs positionnements relatifs entre deux séries voisines sont possibles. Dans un premier cas, la bande comporte au moins deux séries de fenêtres, et la zone définie par la largeur des fenêtres d'une série ne touche pas la zone définie par la largeur des fenêtres d'une série voisine. Dans un autre cas, la première zone définie par la largeur des fenêtres d'une série tangente la seconde zone définie par la largeur des fenêtres d'une série voisine et dans un dernier cas, la première zone chevauche la seconde zone.

Il peut être intéressant de faire apparaître une indication sur le dispositif avertisseur. Il peut par exemple s'agir de la marque de fabrication ou bien d'une indication technique. Dans ce cas, certaines au moins des fenêtres sont agencées de façon à révéler un texte.

Pour obtenir l'orientation moléculaire souhaitée, avantageusement la bande est une bande de matière synthétique étirée, telle que du polypropylène. De préférence, la bande a subi un étirage longitudinal dont le rapport d'étirage est proche de 10.

Dans un mode préféré d'exécution, les fenêtres sont obtenues par perforation à chaud de la bande. Si la bande est étirée, cette perforation a lieu après l'étirage. Sur le pourtour de la fenêtre, les éventuelles bavures sont rectifiées grâce à l'action thermique équivalente à celle d'un recuit : les molécules ne sont alors plus orientées. Les caractéristiques mécaniques à cet endroit sont par conséquent différentes de celles du reste du dispositif.

Dans un autre mode d'exécution, les fenêtres sont obtenues par perforation, suivie d'un traitement thermique tel que le flambage de la bande. Dans ce cas également, si la bande est étirée, la perforation a lieu après l'étirage.

Afin d'améliorer la rigidité transversale de la bande et ainsi sa tenue mécanique, la bande constituant le dispositif avertisseur est avantageusement gaufrée. Le gaufrage permet également de donner plus de volume à la bande et facilite de la sorte sa pose.

Les fenêtres peuvent être découpées, ou leur contour peut être fragilisé, lors de l'opération de gaufrage. Les fenêtres correspondent alors de préférence à des zones en relief obtenues par l'opération de gaufrage.

De toute façon, l'invention sera bien comprise à l'aide de la description qui suit, en référence au dessin schématique annexé, représentant, à titre d'exemples non limitatifs, plusieurs formes d'exécution de ce dispositif :
Figure 1 est une vue à plat d'un tronçon de dispositif selon l'invention ;
Figures 2 à 7 sont six vues à plat de six autres dispositifs ;
Figure 8 est une vue en coupe longitudinale selon la ligne VIII-VIII de la figure 7.

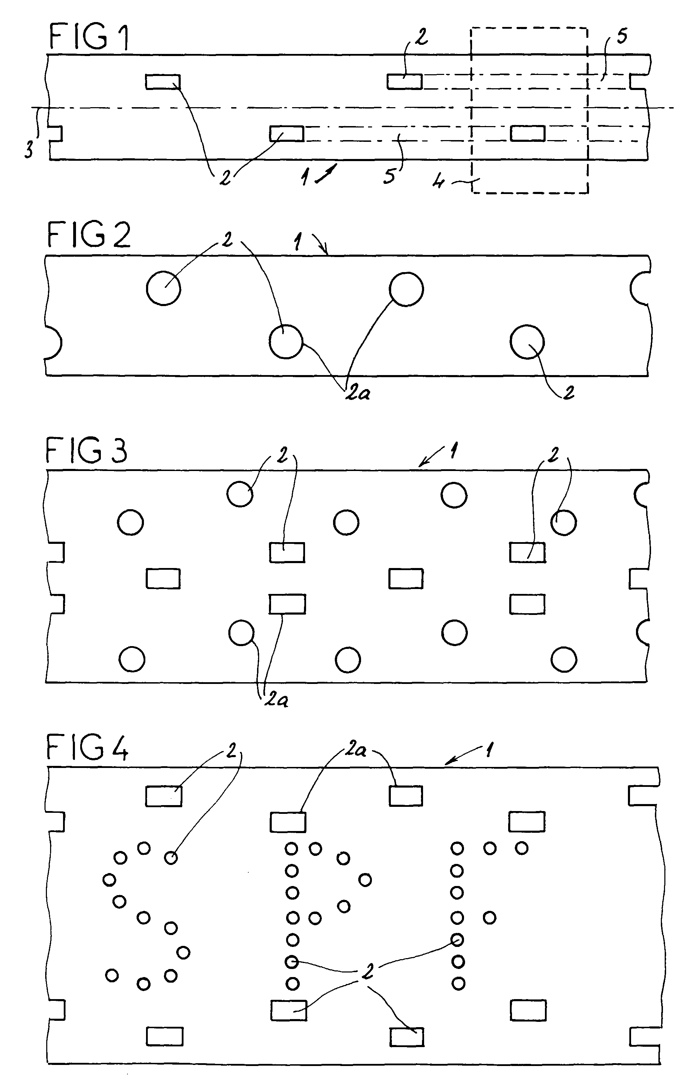

Le dispositif avertisseur, représenté à la figure 1 est constitué d'une bande 1 en polypropylène étiré, avec un rapport d'étirage de l'ordre de 10. Ce dispositif comporte deux séries de fenêtres 2 rectangulaires. Toutes les fenêtres 2 sont identiques. Elles sont situées sur deux lignes parallèles à l'axe longitudinal 3 de la bande 1. Les fenêtres 2 placées sur une même ligne sont régulièrement espacées l'une de l'autre. L'espace entre deux fenêtres consécutives est supérieur à la largeur d'un godet 4 augmenté de la longueur imposée par les normes de l'élément devant rester visible à l'extérieur du godet 4. Les fenêtres 2 des deux séries sont décalées. Sur la figure 1, la fenêtre 2 d'une série de fenêtres se trouve sensiblement au niveau du milieu de deux fenêtres 2 de l'autre série de fenêtres.

Les fenêtres 2 ont été obtenues par perforation à chaud après étirage de la bande 1.

Du fait de l'étirage, les molécules de polypropylène de la bande 1 ont été orientées, et la bande 1 a une résistance mécanique très élevée dans le sens longitudinal. Lors de la perforation à chaud, l'orientation moléculaire n'est pas conservée, et le pourtour des fenêtres 2 présente des caractéristiques mécaniques différentes de celles du reste de la bande 1.

Lorsque ce dispositif est accroché par un godet 4 (figure 1), la bande 1 se déchire. La déchirure est globalement transversale. Cependant, au niveau des fenêtres 2, la résistance mécanique est moindre, et des déchirures, dans le sens longitudinal, s'amorcent. Lorsque le godet 4 tire sur la bande 1 qui est enterrée, des lanières 5 se forment entre les fenêtres 2 et le godet 4. Lorsque le godet 4 sort de la fouille, ces lanières 5 restent soit au niveau du godet 4, soit au niveau de la fouille. Puisque l'espace entre deux fenêtres 2 consécutives d'une même série est supérieur à la largeur du godet 4 augmentée de la longueur de l'élément devant rester visible imposée par les normes, les lanières 5 ont au moins cette longueur imposée. Le fait que les fenêtres 2 des deux séries sont décalées, favorise le fait que des lanières 5 restent au niveau du godet 4, alors que d'autres restent au niveau de la fouille.

La bande 1 présentant une grande résistance mécanique dans le sens longitudinal, elle est parfaitement adaptée à une pose mécanisée. Même une bande de faible largeur a une résistance mécanique suffisante pour subir les contraintes imposée lors d'une pose par une machine d'un dispositif avertisseur.

Les figures 2 à 8 montrent d'autres formes d'exécution d'un dispositif avertisseur similaire à celui décrit ci-dessus. Les dispositifs représentés comportent soit des fenêtres ouvertes, soit des fenêtres dont le contour 2a est fragilisé. Ce contour est fragilisé en réalisant, de manière connue, une diminution d'épaisseur locale au niveau de ce contour 2a. Sur la figure 2, les fenêtres 2 de la bande 1 sont circulaires. Sur la figure 3, la bande 1 a une plus grande largeur et comporte sept séries de fenêtres. Les zones de la bande 1, définies par la largeur des fenêtres d'une même série ne se touchent pas. Lorsqu'un tel dispositif avertisseur est accroché par un godet 4, de nombreuses lanières se forment et permettent de repérer l'ouvrage enterré situé à une vingtaine de centimètres sous le dispositif.

Dans la bande 1 représentée sur la figure 4, quatre séries de fenêtres rectangulaires sont situées près des bords et des fenêtres 2 sont agencées au centre de la bande 1 de façon à révéler un texte, sur cet exemple il s'agit de trois lettres.

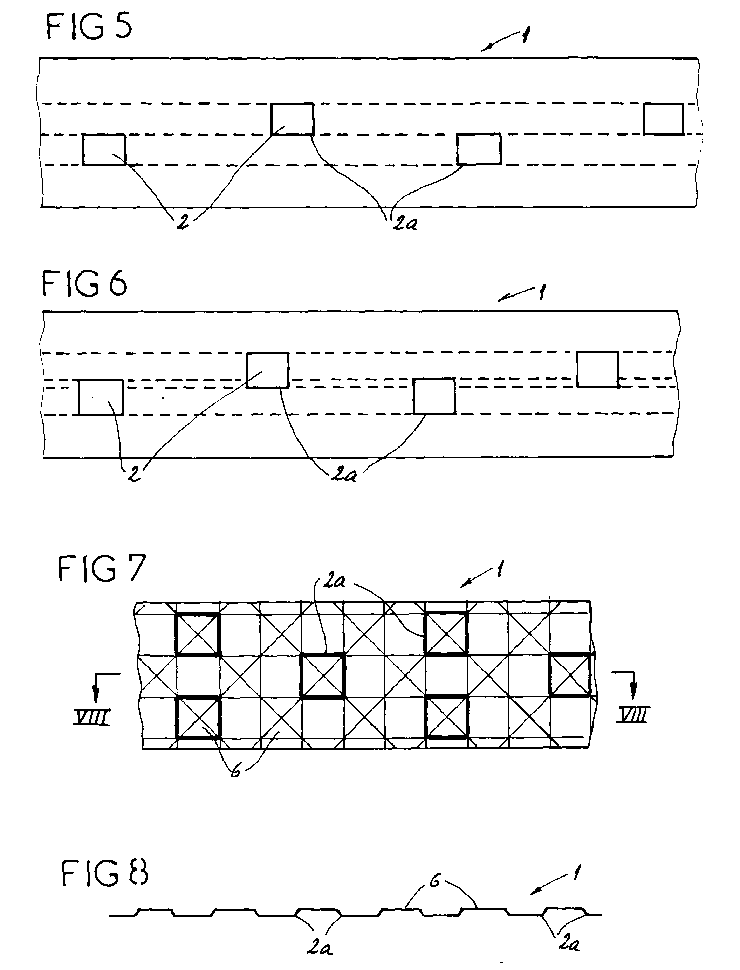

La figure 5 représente un mode de réalisation pour lequel chaque zone de la bande 1, définie par la largeur des fenêtres d'une même série est tangente aux zones qui lui sont voisines. Sur la figure 6, ces zones se chevauchent.

Les figures 7 et 8 représentent un dispositif avertisseur dont la bande 1 est gaufrée. Cette bande 1 présente donc des zones en relief 6, qui sont repérées par une croix. Les contours 2a des fenêtres sont représentés en trait fort. Dans cet exemple, les fenêtres ne sont pas découpées, seul leur contour 2a est fragilisé. Cette fragilisation est obtenue par une diminution locale de l'épaisseur de la bande et est réalisée au cours du gaufrage.

Le gaufrage permet d'augmenter la rigidité transversale de la bande 1 et donc sa tenue mécanique. Ainsi, la bande 1 a moins tendance à se vriller. En outre, elle est plus volumineuse. Ces deux caractéristiques permettent une pose plus aisée du dispositif avertisseur.

Comme il va de soi, l'invention ne se limite pas aux seules formes d'exécution de ce dispositif décrites ci-dessus à titre d'exemples ; elle en embrasse, au contraire toutes les variantes se conformant aux revendications.

Ainsi par exemple, les fenêtres au lieu d'être obtenues par perforation à chaud, peuvent être obtenues par toute autre technique de perforation, suivie ou non d'un traitement thermique adéquat, tel que le flambage.

## Revendications

1. Dispositif avertisseur pour le repérage d'ouvrages enterrés, caractérisé en ce qu'il est constitué d'une bande (1) d'un matériau présentant une orientation moléculaire de sorte que sa résistance mécanique soit très élevée dans le sens longitudinal et moins élevée dans le sens transversal, et comportant au moins une série de fenêtres (2), ouvertes ou dont le contour est fragilisé, espacées les unes des autres et placées sur une même ligne parallèle à l'axe longitudinal (3) de la bande.

2. Dispositif avertisseur selon la revendication 1, caractérisé en ce que la bande (1) comporte au moins deux séries de fenêtres (2) régulièrement espacées, l'espacement entre deux fenêtres consécutives étant constant et identique pour chaque série, et en ce que les fenêtres (2) d'une série sont décalées longitudinalement par rapport aux fenêtres de la série voisine.

3. Dispositif avertisseur selon l'une des revendications 1 à 2, caractérisé en ce que la bande (1) comporte au moins deux séries de fenêtres (2), et en ce que la zone définie par la largeur des fenêtres d'une série ne touche pas la zone définie par la largeur des fenêtres d'une série voisine.

4. Dispositif avertisseur selon l'une des revendications 1 à 2, caractérisé en ce que la bande (1) comporte au moins deux séries de fenêtres (2), et en ce que la zone définie par la largeur des fenêtres d'une série tangente la zone définie par la largeur des fenêtres d'une série voisine.

5. Dispositif avertisseur selon l'une des revendications 1 à 2, caractérisé en ce que la bande (1) comporte au moins deux séries de fenêtres (2), et en ce que la zone définie par la largeur des fenêtres d'une série chevauche la zone définie par la largeur des fenêtres d'une série voisine.

6. Dispositif avertisseur selon l'une quelconque des revendications 1 à 5, caractérisé en ce que certaines au moins des fenêtres (2) sont agencées de façon à révéler un texte.

7. Dispositif avertisseur selon l'une quelconque des revendications 1 à 6, caractérisé en ce que la bande (1) est une bande de matière synthétique étirée, telle que du polypropylène.

8. Dispositif avertisseur selon la revendication 7, caractérisé en ce que la bande (1) a subi un étirage longitudinal dont le rapport d'étirage est proche de 10.

9. Dispositif avertisseur selon l'une quelconque des revendications 1 à 8, caractérisé en ce que les fenêtres (2) sont obtenues par perforation à chaud de la bande (1).

10. Dispositif avertisseur selon l'une quelconque des revendications 1 à 8, caractérisé en ce que les fenêtres (2) sont obtenues par perforation suivie d'un traitement thermique tel que le flambage de la bande (1).

11. Dispositif avertisseur selon l'ensemble des revendications 7 et 9 ou 7 et 10, caractérisé en ce que la perforation des fenêtres est réalisée après l'étirage de la bande.

12. Dispositif avertisseur selon l'une des revendications 1 à 11, caractérisé en ce que la bande (1) est gaufrée.

## Patentansprüche

1. Warnvorrichtung zum Erkennen von unterirdischen Anlagen, **dadurch gekennzeichnet**, daß sie aus einem Band (1) aus einem Material gebildet ist, welches eine derartige Molekülorientierung aufweist, daß seine mechanische Festigkeit in der Längsrichtung sehr groß und in der Querrichtung weniger groß ist, und welches wenigstens eine Reihe von Fenstern (2) aufweist, die geöffnet sind oder deren Umriß geschwächt ist, und die voneinander beabstandet und auf ein und derselben, zur Längsachse (3) des Bands parallelen Linie angeordnet sind.

2. Warnvorrichtung nach Anspruch 1, **dadurch gekennzeichnet**, daß das Band (1) wenigstens zwei Reihen von regelmäßig beabstandeten Fenstern (2) umfaßt, wobei der Abstand zwischen zwei aufeinanderfolgenden Fenstern für jede Reihe konstant und identisch ist, und daß die Fenster (2) einer Reihe in Längsrichtung bezüglich der Fenster der benachbarten Reihe versetzt sind.

3. Warnvorrichtung nach einem der Ansprüche 1 bis 2, **dadurch gekennzeichnet**, daß das Band (1) wenigstens zwei Reihen von Fenstern (2) umfaßt, und daß der durch die Breite der Fenster einer Reihe definierte Bereich den durch die Breite der Fenster einer benachbarten Reihe definierten Bereich nicht berührt.

4. Warnvorrichtung nach einem der Ansprüche 1 bis 2, **dadurch gekennzeichnet**, daß das Band (1) wenigstens zwei Reihen von Fenstern (2) umfaßt, und daß der durch die Breite der Fenster einer Reihe definierte Bereich den durch die Breite der Fenster einer benachbarten Reihe definierten Bereich tangential berührt.

5. Warnvorrichtung nach einem der Ansprüche 1 bis 2, **dadurch gekennzeichnet**, daß das Band (1) wenigstens zwei Reihen von Fenstern (2) umfaßt, und daß der durch die Breite der Fenster einer Reihe definierte Bereich den durch die Breite der Fenster einer benachbarten Reihe definierten Bereich überlappt.

6. Warnvorrichtung nach einem der Ansprüche 1 bis 5, **dadurch gekennzeichnet**, daß wenigstens einige der Fenster (2) derart gebildet sind, daß sie einen Text anzeigen.

7. Warnvorrichtung nach einem der Ansprüche 1 bis 6, **dadurch gekennzeichnet**, daß das Band (1) ein Band aus gestrecktem Kunststoffmaterial, wie z.B. Polypropylen, ist.

8. Warnvorrichtung nach Anspruch 7, **dadurch gekennzeichnet**, daß das Band (1) eine Längsstreckung erfahren hat, deren Streckverhältnis nahe bei 10 liegt.

9. Warnvorrichtung nach einem der Ansprüche 1 bis 8, **dadurch gekennzeichnet**, daß die Fenster (2) durch Heißperforation des Bands (1) erhalten sind.

10. Warnvorrichtung nach einem der Ansprüche 1 bis 8, **dadurch gekennzeichnet**, daß die Fenster (2) durch Perforation und anschließende thermische Behandlung, wie z.B. ein Absengen, des Bands (1) erhalten sind.

11. Warnvorrichtung nach den Ansprüchen 7 und 9 oder 7 und 10, **dadurch gekennzeichnet**, daß die Perforation der Fenster nach dem Strecken des Bands vorgenommen ist.

12. Warnvorrichtung nach einem der Ansprüche 1 bis 11, **dadurch gekennzeichnet**, daß das Band (1) geprägt ist.

## Claims

1. Warning device for marking underground works, characterised in that it consists of a strip (1) of a material having a molecular orientation such that its mechanical strength is very high in the longitudinal direction and less high in the transverse direction, and having at least one series of open apertures (2) whose contour is weakened, spaced apart from each other and placed on one and the same line parallel to the longitudinal axis (3) of the strip.

2. Warning device according to Claim 1, characterised in that the strip (1) has at least two series of evenly spaced apertures (2), the spacing between two consecutive apertures being constant and identical for each series, and in that the apertures (2) in one series are offset longitudinally with respect to the apertures in the adjacent series.

3. Warning device according to one of Claims 1 to 2, characterised in that the strip (1) has at least two series of apertures (2), and in that the zone defined by the width of the apertures in one series does not touch the zone defined by the width of the apertures in an adjacent series.

4. Warning device according to one of Claims 1 to 2, characterised in that the strip (1) has at least two series of apertures (2), in that the zone defined by the width of the apertures in one series is tangential to the zone defined by the width of the apertures in an adjacent series.

5. Warning device according to one of Claims 1 to 2, characterised in that the strip (1) has at least two series of apertures (2), and in that the zone defined by the width of the apertures in one series overlaps the zone defined by the width of the apertures in an adjacent series.

6. Warning device according to any one of Claims 1 to 5, characterised in that at least some of the apertures (2) are arranged so as to reveal a text.

7. Warning device according to any one of Claims 1 to 6, characterised in that the strip (1) is a strip of stretched synthetic material, such as polypropylene.

8. Warning device according to Claim 7, characterised in that the strip (1) has undergone a longitudinal stretching whose stretch ratio is approximately 10.

9. Warning device according to any one of Claims 1 to 8, characterised in that the apertures (2) are obtained by hot perforation of the strip (1).

10. Warning device according to any one of Claims 1 to 8, characterised in that the apertures (2) are obtained by perforation followed by a heat treatment such as torching of the strip (1).

11. Warning device according to Claims 7 and 9 or 7 and 10 together, characterised in that the perforation of the apertures is carried out after the stretching of the strip.

12. Warning device according to one of Claims 1 to 11, characterised in that the strip (1) is embossed.
